# FASCICULE DE BREVET EUROPEEN

(11) **EP 3 986 813 B1**
(45) Date de publication et mention de la délivrance du brevet: **26.07.2023**
(21) Numéro de dépôt: 20732630.7
(22) Date de dépôt: 18.06.2020
(51) Int. Cl.: B65G 47/84

(54) **DISPOSITIF DE CONVOYAGE ET INSTALLATION DE TRAITEMENT DE PRODUITS**
FÖRDEREINRICHTUNG UND PRODUKTVERARBEITUNGSANLAGE
CONVEYING DEVICE AND PRODUCT PROCESSING INSTALLATION

(30) Priorité: 20.06.2019 FR 1906635
(43) Date de publication de la demande: 27.04.2022
(73) Titulaire: SIDEL PARTICIPATIONS, 76930 Octeville-sur-Mer (FR)
(72) Inventeur: CHOPLIN, Grégory, 21910 CORCELLES-LES-CITEAUX (FR); BRACHET, Vincent, 76930 OCTEVILLE SUR MER (FR)
(74) Mandataire: Sidel Group
(86) Numéro de dépôt international: PCT/EP2020/067006
(87) Numéro de publication internationale: WO 2020/254516

(56) Documents cités:
- WO-A1-95/31390
- WO-A2-2012/056140
- US-A1- 2015 122 397

## Description

Dispositif de convoyage et installation de traitement de produits La présente invention entre dans le domaine du convoyage de produits au sein d'une ligne industrielle de production et de traitement desdits produits.

Au sens de la présente invention, le terme « produit » englobe un objet individuel. Un tel produit est un récipient, comme une bouteille ou un flacon, notamment en verre, en métal ou en matériau plastique, rigide ou semi-rigide. Un tel récipient est destiné à contenir un liquide ou des aliments. Un tel récipient comprend un corps avec un col ou goulot, pourvu d'une ouverture située en partie supérieure et refermée par un bouchon ou une capsule. En outre, dans le cas d'une bouteille, le goulot peut généralement comprendre une bague annulaire, appelée collerette, située en partie basse à la jonction avec le reste du corps. Cette collerette est prévue saillante par rapport à la paroi extérieure du récipient. Elle sert notamment d'appui ou de butée lors de la préhension d'un récipient au cours de ses différents traitements.

A ce titre, de manière connue, au sein d'une ligne industrielle, les produits peuvent recevoir plusieurs traitements successifs au sein de postes différents, allant de la fabrication du contenant par une opération d'injection plastique, de soufflage ou d'étirage-soufflage, en passant notamment par le remplissage, le bouchage et l'étiquetage des produits à l'unité, jusqu'au conditionnement en lots de plusieurs produits regroupés.

Au cours de ces différentes étapes, les produits sont déplacés par différents moyens de convoyages adaptés. Ces déplacements s'effectuent selon différents référencements. En effet, en fonction des postes de traitements et du type de convoyage, les produits sont pris en charge avec des interactions situées à différents endroits, à savoir le fond, les parois latérales, le goulot, notamment sur ou sous la collerette, ou bien encore par l'intermédiaire d'un godet recevant un produit. Par exemple, un premier référencement peut être une saisie des produits par préhension au niveau du goulot ou du col, notamment en appui sur ou sous la collerette. Un autre référencement peut consister à transporter les produits par leur fond reposant en surface d'un convoyeur, notamment de type à bande sans fin. Un référencement différent peut aussi consister à maintenir les produits au niveau de leur corps ou de leur flanc, notamment par l'intermédiaire d'un organe alvéolé recevant une partie dudit corps.

Dès lors, le long d'une ligne de production, les postes sont implantés en prenant en compte les différences des référencements des produits pour chacun des postes de traitement et/ou les convoyeurs. En somme, on ajuste notamment la hauteur des différents postes, par exemple en réglant les structures porteuses, les pieds, voire en calant.

Par exemple, un poste de traitement équipé d'une roue de transfert assurant une saisie par préhension du col des produits, peut délivrer et relâcher les produits en face supérieure d'un convoyeur qui les transporte alors par leur fond. La hauteur de la roue de transfert et la hauteur du convoyeur sont alors déterminées et fixées par rapport à la distance entre le col et le fond des produits. En d'autres termes, on fixe lors de l'implantation des postes la distance requise entre, d'une part, un premier référencement vertical des produits par le poste amont, à savoir la roue de transfert, et, d'autre part, un autre référencement vertical du convoyeur, et ce en fonction du format de produits à traiter.

Il est aussi possible d'ajouter des moyens intermédiaires assurant la prise en charge et le déplacement vertical des produits entre des postes et/ou des convoyeurs ayant un écart entre leur référencement respectif. En somme, ces moyens intermédiaires assurent le rattrapage du décalage vertical le long de la ligne.

Au sein de la présente invention, un référencement de produit s'entend en élévation, verticalement.

Dans ce contexte, une problématique récurrente réside dans le fait qu'une ligne de production doit permettre les traitements de plusieurs formats de produits, ayant des dimensions différentes, en particulier les hauteurs. Par exemple, pour une boisson donnée, comme de l'eau ou du soda, une ligne de production doit permettre de traiter des bouteilles de différentes contenances, notamment de deux litres (2L), un litre cinq (1,5L), un litre (1L) et soixante-quinze centilitres (75cl). Dès lors, au moment du passage d'un format à un autre, il y a des écarts verticaux entre les différents référencements de prise en charge des produits par l'un et l'autre des postes de traitement. Il est alors nécessaire de compenser ces écarts.

Toutefois, la plupart des postes sont implantés à des hauteurs fixes et déterminées, avec des composants et des organes les rendant difficilement ajustables en hauteur. De surcroît, plusieurs postes coopèrent de façon coordonnée et souvent en imbrication, compliquant une éventuelle conjointe modification de la hauteur de l'un et l'autre. WO 2012/056140 A2 divulgue un dispositif de convoyage selon le préambule de la revendication 1.

L'invention a pour but de pallier les inconvénients de l'état de la technique en proposant un dispositif de convoyage de produits au sein d'une ligne de production, dont il est possible d'adapter la hauteur en fonction des écarts verticaux des référencements survenant entre deux formats différents de produits.

De façon combinée, l'invention prévoit d'adapter conjointement la hauteur d'un moyen assurant l'accompagnement des produits le long dudit dispositif de convoyage, afin d'assurer leur stabilité, en particulier dans le cas d'un écart entre le premier référencement d'un poste amont et ledit autre référencement du poste aval, induisant une pente inclinée entre lesdits postes amont et aval.

Pour ce faire, un tel dispositif de convoyage de produits au sein d'une ligne de production, entre un poste amont délivrant selon un premier référencement de produits, et un poste aval alimenté par lesdits produits selon un autre référencement, comprend :
- au moins un convoyeur s'étendant entre ledit poste amont et ledit poste aval, configuré pour transporter lesdits produits selon ledit autre référencement selon au moins une direction de convoyage ;
- ledit convoyeur comprenant une zone de réception au niveau dudit poste amont et une zone d'alimentation dudit poste aval ;
- des moyens d'accompagnement par poussée des produits, lesdits moyens d'accompagnement comprenant une section s'étendant parallèlement par rapport à au moins une portion dudit au moins un convoyeur, située entre ledit poste amont et ledit poste aval.

Ledit dispositif de convoyage se caractérise en ce que :
- ladite portion comprend une extrémité avale fixe ;
- ladite portion et ladite zone de réception sont mobiles de façon solidaire entre une position haute et une position basse, ladite portion étant mobile autour de son extrémité avale fixe ; et
- ladite section est conjointement mobile avec ladite portion.

Selon des caractéristiques additionnelles, non limitatives, ladite zone de réception peut être mobile en translation verticale.

En position haute, une partie de ladite portion peut comprendre une pente par rapport à l'horizontal selon un angle de maximum 20°, préférentiellement de 2° ou de 3°.

L'extrémité fixe de ladite portion peut comprendre un rouleau de renvoi aval fixe dans un plan horizontal et ladite portion comprend au moins un rouleau de renvoi amont mobile verticalement par rapport audit plan horizontal.

Lesdits moyens d'accompagnement peuvent comprendre un cycleur à barres, lesdites barres étant montées solidaires d'au moins une chaîne d'entraînement. Le dispositif de convoyage peut comprendre des moyens de guidage latéral desdits produits, lesdits moyens de guidage s'étendant au moins le long d'une partie de ladite portion et une partie correspondante desdits moyens de guidage est conjointement mobile avec ladite partie de ladite portion.

L'invention concerne aussi une installation de traitement de produits au sein d'une ligne de production, comprenant :
- un poste amont de groupage desdits produits en lots ;
- un poste aval de conditionnement desdits lots par fardelage ou par encaissage ; caractérisée en ce qu'elle comprend :
- au moins un dispositif de convoyage desdits produits selon l'une quelconque des revendications précédentes.

Selon des caractéristiques additionnelles, non limitatives, ledit poste amont de groupage peut comprendre des moyens de préhension desdits produits selon ledit premier référencement vertical.

Lesdits moyens de préhension peuvent être montés mobiles sur des navettes, ledit poste de groupage comprenant des guides de déplacement desdites navette sous forme de moteur linéaire.

D'autres caractéristiques et avantages de l'invention ressortiront de la description détaillée qui va suivre des modes de réalisation non limitatifs de l'invention, en référence aux figures annexées, dans lesquelles :
La figure 1 représente schématiquement en vue de côté un premier mode de réalisation du dispositif de convoyage, implanté selon une configuration d'entrée d'un format de produits, un premier référencement vertical d'un poste en amont étant aligné avec un autre référencement vertical situé en aval ;
La figure 2 représente schématiquement une vue similaire à la figure 1, montrant le dispositif de convoyage, implanté selon une autre configuration d'entrée d'un autre format de produits, le premier référencement vertical étant plus élevé que l'autre référencement vertical située en aval ;
La figure 3 représente schématiquement en vue de côté un détail d'un deuxième mode de réalisation du dispositif de convoyage, implanté selon une configuration d'entrée d'un format de produits, un premier référencement vertical d'un poste en amont étant aligné avec un autre référencement vertical situé en aval ; et
La figure 4 représente schématiquement une vue similaire à la figure 3, montrant le dispositif de convoyage, implanté selon une autre configuration d'entrée d'un autre format de produits, le premier référencement vertical étant plus élevé que l'autre référencement vertical située en aval.

La présente invention concerne le convoyage de produits 1 au sein d'une ligne industrielle de production et de traitement.

Un produit 1 est préférentiellement un objet individuel. Un tel produit 1 est un récipient, comme une bouteille ou un flacon, notamment en verre, en métal ou en matériau plastique, rigide ou semi-rigide. Un tel récipient est destiné à contenir un liquide ou des aliments. Un tel récipient comprend un corps avec un goulot, pourvu d'une ouverture ou « buvant » située en partie supérieure et refermée par un bouchon ou une capsule. En outre, dans le cas d'une bouteille, le goulot peut généralement comprendre une bague annulaire, appelée collerette, située en partie basse à la jonction avec le reste du corps. Cette collerette est prévue saillante par rapport à la paroi extérieure du récipient. Elle sert notamment d'appui ou de butée lors de la préhension d'un produit 1 au cours de ses différents traitements.

A ce titre, au sein de ladite ligne industrielle, les produits 1 peuvent recevoir plusieurs traitements successifs au sein de postes différents, allant de la fabrication du contenant par une opération d'injection plastique, de soufflage ou d'étirage-soufflage, en passant notamment par le remplissage, le bouchage et l'étiquetage des produits 1 à l'unité, jusqu'au conditionnement en lots de plusieurs produits 1 regroupés.

Il est alors nécessaire de déplacer les produits 1 le long de ladite ligne de production, afin qu'ils subissent les différents traitements par les postes prévus à cet effet.

Pour ce faire, l'invention vise un dispositif de convoyage 2 de produits 1 au sein de ladite ligne de production.

En particulier, le dispositif de convoyage 2 transporte les produits entre un poste amont délivrant les produits 1, et un poste aval alimenté par lesdits produits 1. Le dispositif de convoyage 2 assure donc le déplacement des produits 1, selon une direction de convoyage s'étendant depuis l'amont vers l'aval.

Plus avant, le poste situé en amont délivre les produits 1 selon un premier référencement 3, tandis que le poste situé en aval reçoit les produits 1 selon un autre référencement 4.

Au sens de la présente invention, on entend par « référencement » une position en élévation, déterminée par rapport à la verticale. Cette verticale peut être prise en compte dans un repère centré sur l'infrastructure recevant la ligne de production, comme le sol de son bâtiment, ou bien centré sur une hauteur donnée d'au moins un poste de traitement, déterminant alors un plan de référence, communément appelé « plan de travail ».

Selon les modes de réalisation représentés sur les figures, le premier référencement 3 correspond à une prise en charge des produits 1 par préhension au niveau de leur extrémité supérieure, notamment le col ou le buvant, par exemple sur ou sous la collerette de produits 1 de type bouteille ; l'autre référencement 4 correspond à une prise en charge des produits 1 en face supérieure du dispositif de convoyage 2, les produits 1 reposant alors au niveau de leur extrémité inférieure, à savoir leur fond. Les produits1 peuvent aussi être retournés, reposant alors sur leur bouchon, prévu plan, par exemple dans le cas de flacons, notamment contenant un cosmétique.

On notera que les produits 1 peuvent reposer directement sur le dispositif de convoyage 2 ou bien par l'intermédiaire d'un support, comme un godet ou « puck », ou bien une barquette cartonnée.

Dans ce contexte, l'invention concerne aussi une installation de traitement des produits 1 au sein de la ligne de production.

Une telle installation comprend situé en amont un poste de groupage 5 desdits produits 1 en lots.

Selon différents modes de réalisation, le poste de groupage 5 assure la prise en charge des produits 1 à un niveau, comme le goulot ou le corps, déterminant ledit premier référencement 3.

Préférentiellement, ledit poste amont de groupage 5 comprend des moyens de préhension 50 desdits produits 1 selon ledit premier référencement vertical. Selon un mode de réalisation, le poste de groupage 5 peut comprendre une roue de transfert, pourvue à sa périphérie de pinces formant les moyens de préhension 50. De telles pinces viennent alors saisir les produits 1 latéralement, par le côté, de préférence au niveau du goulot, notamment sous ou sous la collerette.

Selon un autre mode de réalisation, lesdits moyens de préhension 50 peuvent assurer la saisie des produits 1 supérieurement, venant enserrer le goulot, notamment par appui sur et/ou sous la collerette.

Préférentiellement, lesdits moyens de préhension 50 sont montés mobiles sur des navettes, sur le côté, en dessous ou au-dessus. Ledit poste de groupage 5 comprend aussi des guides 51 le long desquels lesdites navettes se déplacent. En outre, les guides 51 et les navettes peuvent comprendre une motorisation sous forme de moteur linéaire. Rappelons qu'un moteur linéaire est un moteur électrique dont chaque rotor et chaque stator sont déroulés, notamment à plat ; le moteur linéaire génère une force de déplacement notamment en translation d'au moins un rotor par rapport au stator.

Dans le cas présent, préférentiellement, les guides 51 forment le ou les stators, tandis que chaque navette forme un rotor.

L'utilisation d'une telle motorisation linéaire entre les navettes et les guides 51 permet de contrôler indépendamment les déplacements des navettes les unes des autres le long desdits guides 51. Un tel contrôle peut s'opérer de façon automatisée par un moyen de gestion adapté.

Ladite installation comprend situé en aval un poste de conditionnement desdits lots par fardelage ou par encaissage. Un tel poste de conditionnement comprend un moyen de convoyage 6, notamment de type tapis à bande sans fin. Dès lors, c'est le moyen de convoyage 6 du poste aval qui détermine l'autre référencement 5, notamment la prise en charge par le fond des produits 1 sur ledit tapis dudit moyen de convoyage 6.

Avantageusement, l'installation comprend au moins un dispositif de convoyage 2 selon l'invention, assurant le déplacement des produits 1 entre ledit poste de groupage 3 et le poste aval.

Dès lors, ledit dispositif de convoyage 2 comprend au moins un convoyeur 7 s'étendant entre ledit poste amont et ledit poste aval. De préférence, ledit dispositif de convoyage 2 comprend plusieurs convoyeurs 7 successifs. Chaque convoyeur 7 déplace lesdits produits 1 selon ledit autre référencement 4 selon au moins la direction de convoyage, à savoir de l'amont vers l'aval.

Comme évoqué précédemment, l'autre référencement 4 correspond à une prise en charge des produits 1 reposant par leur fond sur la face supérieure de chaque convoyeur 7, directement ou par l'intermédiaire d'un support, notamment de type godet ou barquette cartonnée.

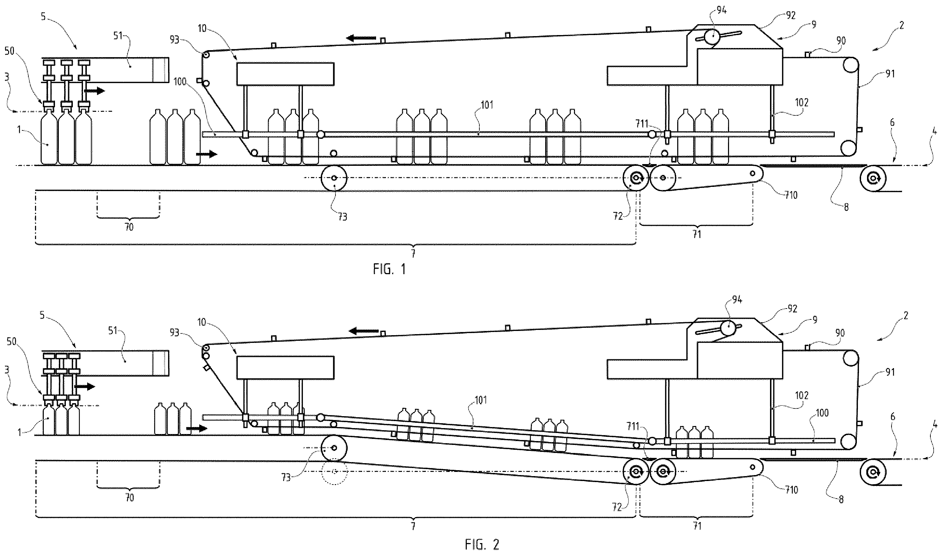

Plus avant, ledit au moins un convoyeur 7 comprend une zone de réception 70 au niveau dudit poste amont. De préférence, ladite zone de réception 70 s'étend au moins partiellement sous ledit poste amont. Selon les modes de réalisation des figures 1 et 2, le poste de groupage 5 vient alors déplacer et relâcher les produits 1 au-dessus de la zone de réception 70, les déposant à des endroits précis.

A ce titre, les moyens de préhension 50 du poste de groupage 5 peuvent être mobile longitudinalement, parallèlement ou sensiblement parallèlement à la surface du convoyeur 7 au niveau de la zone de réception 70. Les moyens de préhension 50 peuvent aussi être déplacés transversalement par rapport à la surface du convoyeur 7, permettant de positionner les produits 1 sur la largeur du convoyeur 7 au moment de leur dépose dans la zone de réception 70.

Le convoyeur 7 comprend aussi une zone d'alimentation 71 dudit poste aval. Cette zone d'alimentation se situe à l'extrémité opposée de ladite zone de réception 70, à l'autre bout du ou des convoyeurs 7. En outre, un convoyeur de sortie 710 est préférentiellement dédié à la zone de réception 70.

Une plaque intermédiaire 711 peut être positionnée en affleurement entre le convoyeur de sortie 710 et la fin du convoyeur 7, afin de combler le creux entre les deux.

On notera qu'une zone dite « morte », sous forme d'une tôle 8, peut être positionnée entre la zone d'alimentation 71 et le début du moyen de convoyage 6 du poste aval. Préférentiellement, la tôle 8 se situe entre le convoyeur de sortie 710 et le moyen de convoyage 6.

De façon combinée, le dispositif de convoyage 2 assure le maintien des produits 1 au cours de leur déplacement par le convoyeur 7. Pour ce faire, le dispositif de convoyage 2 comprend des moyens d'accompagnement 9 par poussée des produits 1.

Les moyens d'accompagnement 9 peuvent s'étendre supérieurement par rapport au convoyeur 7, venant appliquer une poussée au-dessus de la surface dudit convoyeur 7.

Préférentiellement, lesdits moyens d'accompagnement 9 comprennent un cycleur à barres 90. Lesdites barres 90 sont montées solidaires d'au moins une chaîne 91 d'entraînement. En outre, les barres 90 peuvent être fixées à intervalles réguliers sur la longueur de la chaîne 91. Dès lors, l'entraînement par la chaîne 91 vient déplacer lesdites barres 91 contre les produits 1 situés en face supérieure du convoyeur 7, depuis l'amont, assurant un maintien des produits 1 par l'arrière au cours de leur convoyage.

Comme visible sur les figures, le poste de groupage 5 détermine des lots de produits 1. Chaque barre 90 vient alors en appui contre le dernier produit 1 de chaque lot selon la direction de convoyage, de préférence depuis l'amont vers l'aval.

Selon les modes de réalisation représentés sur les figures, les moyens d'accompagnement 9 peuvent comprendre une motorisation 92, actionnant le déplacement de la chaîne 91, ainsi que sa mise sous tension. Ladite chaîne 91 est montée autour de pignons 93 de renvoi, montés solidaires libre en rotation sur une structure fixe. La chaîne 91 forme un circuit fermé.

En outre, la vitesse d'entraînement de la chaîne 91 des moyens d'accompagnement 9 peut être prévue au moins égale, de préférence en supérieure, à la vitesse de progression du convoyeur 7. Cette sur-vitesse induit une poussée des barres 91 contre le lot de produits 1, assurant que les produits 1 d'un lot restent groupés, notamment accolés, tout au long de leur convoyage. Lesdits moyens d'accompagnement 9 comprennent une section s'étendant parallèlement par rapport à au moins une portion dudit au moins un convoyeur 7, ladite portion étant située entre ledit poste amont et ledit poste aval.

Lesdits moyens d'accompagnement 9 peuvent donc s'étendre parallèlement ou sensiblement parallèlement par rapport à surface du convoyeur 7. En particulier, la chaîne 91 s'étend parallèlement par rapport au convoyeur 7, sur toute ou une partie de la longueur de ce dernier. Plus particulièrement, c'est le brin de la chaîne 91 situé depuis la position initiale de poussée des produits 1 jusqu'à l'arrêt de ladite poussée en une position en aval, notamment à proximité de la tôle 8, qui s'étend le long et parallèlement au convoyeur 7.

En outre, en fonction des configurations, la chaîne 91 peut être horizontale ou sensiblement horizontale, ou bien inclinée, suivant une partie du convoyeur 7. Ainsi, les moyens d'accompagnement 9 suivent les produits 1 en leur appliquant une force d'appui rectiligne qui suit leur déplacement sur le convoyeur 7. Avantageusement, ladite portion dudit au moins un convoyeur 7 comprend une extrémité avale 72 fixe. En d'autres termes, l'extrémité proche de la sortie est solidaire du châssis et n'est pas mobile dans un plan vertical. Cette extrémité avale 72 peut être mobile en rotation et peut comprendre un arbre de motorisation du convoyeur 7.

De plus, ladite portion et ladite zone de réception 70 sont mobiles de façon solidaire entre une position haute et une position basse. En particulier, c'est toute la portion du convoyeur 7 située en amont de l'extrémité avale 710 qui peut être déplacée selon un seul ensemble.

Plus avant, ladite portion est mobile autour de son extrémité avale 710 fixe.

Préférentiellement, ladite zone de réception 70 est mobile en translation verticale. En somme, elle monte ou descend verticalement pour passer entre les positions hautes et basses. Dès lors, la portion suit l'ascension et la descente de ladite zone de réception 70, notamment au travers d'une rotation.

A ce titre, la position haute est déterminée en fonction de la hauteur des produits 1 pris en charge par le poste amont, préférentiellement par les moyens de préhension 50 du poste de groupage 5. En sommes, les positions hautes et basses sont configurées par rapport à la distance entre, d'une part, le premier référencement, notamment au niveau du goulot, préférentiellement par saisie sur ou sous collerette et, d'autre part, l'autre référencement, notamment correspondant à la face supérieure du convoyeur 7.

On notera que plusieurs positions intermédiaires se situent entre les positions haute et basse. Chaque position intermédiaire du convoyeur 7 correspond à un format de produits 1, en particulier à la hauteur du format de produits 1.

Le passage d'une position à une autre s'effectue entre les productions, au moment d'un changement format des produits 1 qui impactent sur le premier référencement 3. En d'autres termes, le format de produits 1 précédemment traités présente au moins une hauteur différente du format des produits 1 qui seront traités ultérieurement.

En outre, afin d'assurer la convenable dépose des produits 1, la zone de réception 70 reste horizontale ou sensiblement horizontale dans l'une ou l'autre des positions haute ou basse, ainsi que toutes les positions intermédiaires. En somme, la partie de convoyeur 7 située entre la zone de réception 70 et l'extrémité avale 710 fait office de bielle lors du passage entre les positions hautes et basses.

A ce titre, selon un mode de réalisation, comme visible sur les figures 1 et 2, l'extrémité avale 710 fixe de ladite portion comprend un rouleau de renvoi aval 72 fixe dans un plan horizontal. De plus, ladite portion comprend au moins un rouleau de renvoi amont 73 mobile verticalement par rapport audit plan horizontal. C'est alors le déplacement dudit rouleau 73 qui assure la montée vers la position haute ou la descente vers la position basse du convoyeur 7.

En outre, ce rouleau de renvoi 73 peut être libre en rotation ou motorisé.

On notera qu'au moins un autre rouleau (non représenté) est situé à l'opposé dudit rouleau 73, en amont. Au moins cet autre rouleau est conjointement monté ou descendu avec le rouleau de renvoi 73.

Ainsi, le tapis du convoyeur 7, en particulier lors du passage depuis une position horizontale vers une position plus haute, reste plaqué contre ce rouleau de renvoi 73.

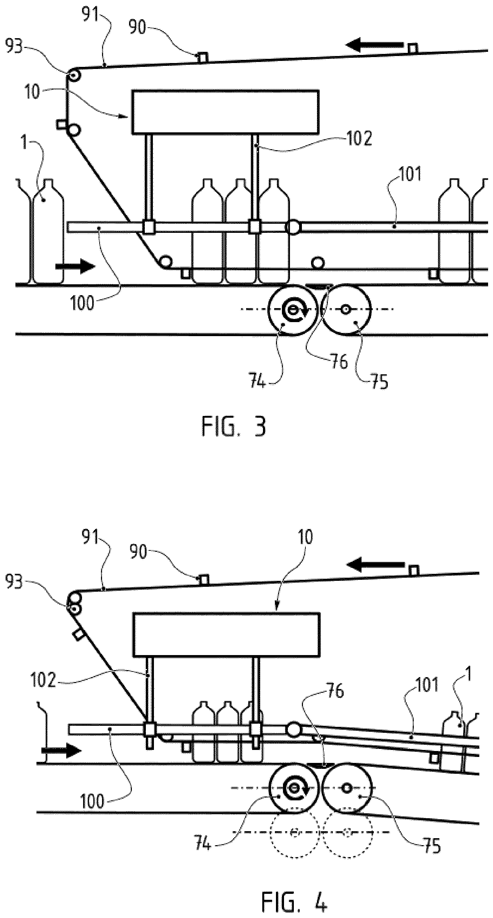

Selon un autre mode de réalisation, comme visible sur le détail des figures 3 et 4, ladite portion comprend un premier rouleau de renvoi 74 et un deuxième rouleau de renvoi 75, adjacents. Ces premier 74 et deuxième 75 rouleaux séparent alors le convoyeur 7, en particulier sa portion, en deux sous-convoyeurs amont et aval. Le sous-convoyeur amont intègre la zone de réception 70.

Les deux premier 74 et deuxième 75 rouleaux peuvent être déplacés verticalement ensemble, lors du changement d'une position à une autre, en vue de s'adapter au changement de format des produits 1 traités. Les premier 74 et deuxième 75 rouleaux subissent alors la même course de déplacement.

Les premier 74 et deuxième 75 rouleaux peuvent aussi avoir des courses différentes, notamment le deuxième rouleau 75 situé en aval se déplaçant moins verticalement par rapport à une position horizontale, en alignement des deux rouleaux 74,75. En somme, en position haute plus élevée que la position horizontale, le deuxième rouleau 75 peut être monté jusqu'à une hauteur légèrement inférieure à celle du premier rouleau 74. De même, en position basse moins élevée que la position horizontale, le deuxième rouleau 75 peut être descendu jusqu'à une hauteur plus haute que celle du premier rouleau 74. Cette différence de hauteur améliore la jonction entre les extrémités adjacentes des sous-convoyeurs, limitant les risques de déséquilibre des produits 1 passant de l'un à l'autre.

En outre, l'un et/ou l'autre des premier 74 et deuxième 75 rouleaux peuvent être libres et/ou motorisés, en fonction des autres rouleaux du convoyeur 7.

Par ailleurs, une plaque supplémentaire 76 peut être positionnée en affleurement entre les premier 74 et deuxième 75 rouleaux, afin de combler le creux situé entre les deux.

Ainsi, une configuration à double rouleaux 74,75 permet de passer depuis une position basse sous un plan horizontal jusqu'à une position haute au-dessus de ce plan horizontal, en passant par une position intermédiaire coïncidant avec ce plan horizontal, tout en assurant la bonne tension de chaque tapis des sous-convoyeurs correspondants.

Avantageusement, dans une position plus haute ou plus basse qu'un plan horizontal, à savoir que au-delà de la position dans laquelle toute la portion du convoyeur 7 est sensiblement horizontale, une partie du convoyeur 7 est alors inclinée par rapport audit plan horizontal. Un exemple d'une inclinaison est visible sur la figure 2.

Selon un mode de réalisation, en position haute, une partie de ladite portion comprend une pente par rapport à l'horizontal selon un angle de maximum 20°. Préférentiellement, ladite pente présente un angle de 2° ou de 3°.

Une telle pente s'étend selon la direction de convoyage. Ladite pente peut être croissante ou décroissante jusqu'à l'extrémité avale fixe 72.

En outre, l'inclinaison maximale de la pente est telle que, l'axe vertical passant par le centre de gravité des produits 1, reste inscrit dans la projection dans le plan du pourtour dudit produit 1, (i.e. dans le fond du produit 1), en vue d'éviter tout basculement du produit 1 vers l'avant dans une pente descendante. A l'inverse, dans une pente montante, les moyens d'accompagnement 9 assurent un maintien par l'arrière des produits 1.

A ce titre, avantageusement, de façon combinée avec la mobilité de ladite portion et ladite zone de réception 70, ladite section des moyens d'accompagnement 9 est conjointement mobile avec ladite portion. En somme, le déplacement s'effectue de façon synchronisée, afin que le brin de la chaîne 91 suive la surface du convoyeur 7.

Une tel mobilité de la chaîne 91 peut être obtenue par déplacement vertical, préférentiellement selon une translation, de certains pignons 93.

En outre, lors du déplacement montant ou descendant des pignons 93, la longueur de la chaîne 91 variant, un organe tenseur 94 des moyens de motorisation 92 peuvent compenser cet écart, comme notamment visible entre les figures 1 et 2.

Selon un mode de réalisation préférée, le dispositif de convoyage 2 comprend des moyens de guidage 10 latéral desdits produits 1. Ces moyens de guidage 10 s'étendent supérieurement par rapport au convoyeur 7 et assure le maintien de l'alignement longitudinal des produits 1 au cours de leur convoyage, en particulier dans la pente quand elle est présente.

Dès lors, dans ce mode de réalisation, lesdits moyens de guidage 10 s'étendent au moins le long d'une partie de ladite portion du convoyeur 7. De plus, une partie correspondante desdits moyens de guidage 10 est conjointement mobile avec ladite partie de ladite portion dudit convoyeur 7. En somme, les moyens de guidage 10 sont déplacés avec la portion du convoyeur 7 lors du passage d'une position à une autre lors du changement de format.

Selon un mode de réalisation, les moyens de guidage 10 peuvent comprendre des parois verticales, saillantes verticalement et orthogonalement par rapport à la surface du convoyeur 7.

Selon les modes de réalisation représenté sur les figures, les moyens de guidage 10 comprennent des tiges 100 suspendues. Ces tiges 100 s'étendent parallèlement ou sensiblement parallèlement par rapport à la surface du convoyeur 7.

Les tiges 100 sont mobiles verticalement, en coulissement, afin de s'adapter aux changements de position de la portion du convoyeur 7, lors du changement de format des produits 1 à traiter.

En particulier, les moyens de guidage 10 peuvent comprendre une partie amont située au-dessus de la zone de réception 70 et une partie aval située au-dessus de la zone d'alimentation 71. Le long des parties amont et aval, les tiges 100 sont horizontales et mobiles en translation verticalement sur des supports 102. De plus, une ou plusieurs tiges intermédiaires 101 peuvent être situées dans la portion du convoyeur 7 destinée à être inclinée.

Selon le mode de réalisation visible sur les figures 1 et 2, la tige intermédiaire 101 est montée articulée aux tiges 100, notamment autour d'une articulation en pivotement, afin de suivre le déplacement de la portion du convoyeur 7.

Selon un autre mode de réalisation, non représenté, la ou les tiges intermédiaires peuvent être montées mobiles sur des supports indépendants.

En outre, la tige intermédiaire 101 peuvent être prévue télescopique, afin d'adapter sa longueur, lors du changement de position du convoyeur 7.

Ainsi, le dispositif de convoyage 2 selon l'invention prévoit de régler la pente d'une partie du convoyeur 7, pour rattraper la différence de hauteur entre les formats de produits 1, à savoir le changement entre, d'une part, le premier référencement 3 à l'entrée, provenant du traitement du poste amont, notamment la saisie par préhension du poste de groupage 5, et d'autre part, l'autre référencement 4 le long du convoyeur 7 et requis pour le poste situé en aval.

## Revendications

1. Dispositif de convoyage (2) de produits (1) au sein d'une ligne de production, entre un poste amont délivrant selon un premier référencement (3) de produits (1), et un poste aval alimenté par lesdits produits (1) selon un autre référencement (4) ; ledit dispositif comprenant :
- au moins un convoyeur (7) s'étendant entre ledit poste amont et ledit poste aval, configuré pour transporter lesdits produits (1) selon ledit autre référencement (4) selon au moins une direction de convoyage ;
- ledit convoyeur (7) comprenant une zone de réception (70) au niveau dudit poste amont et une zone d'alimentation (71) dudit poste aval ;
- des moyens d'accompagnement (9) par poussée des produits (1), lesdits moyens d'accompagnement (9) comprenant une section s'étendant parallèlement par rapport à au moins une portion dudit au moins un convoyeur (7) située entre ledit poste amont et ledit poste aval ;
**caractérisé en ce que** :
- ladite portion comprend une extrémité avale fixe (72) ;
- ladite portion et ladite zone de réception (70) sont mobiles de façon solidaire entre une position haute et une position basse, ladite portion étant mobile autour de son extrémité avale fixe (72) ; et
- ladite section est conjointement mobile avec ladite portion.

2. Dispositif de convoyage (2) selon la revendication 1, **caractérisé par le fait que** ladite zone de réception (70) est mobile en translation verticale.

3. Dispositif de convoyage (2) selon l'une quelconque des revendications précédentes, **caractérisé par le fait qu'**en position haute, une partie de ladite portion comprend une pente par rapport à l'horizontal selon un angle de maximum 20°, préférentiellement de 2° ou de 3°.

4. Dispositif de convoyage (2) selon l'une quelconque des revendications précédentes, **caractérisé par le fait que** l'extrémité fixe (72) de ladite portion comprend un rouleau de renvoi aval fixe dans un plan horizontal et ladite portion comprend au moins un rouleau de renvoi amont (73) mobile verticalement par rapport audit plan horizontal.

5. Dispositif de convoyage (2) selon l'une quelconque des revendications précédentes, **caractérisé par le fait que** lesdits moyens d'accompagnement (9) comprennent un cycleur à barres (90), lesdites barres (90) étant montées solidaires d'au moins une chaîne (91) d'entraînement.

6. Dispositif de convoyage (2) selon l'une quelconque des revendications précédentes, **caractérisé par le fait qu'**il comprend des moyens de guidage (10) latéral desdits produits (1), lesdits moyens de guidage (10) s'étendant au moins le long d'une partie de ladite portion et une partie correspondante desdits moyens de guidage (10) est conjointement mobile avec ladite partie de ladite portion.

7. Installation de traitement de produits (1) au sein d'une ligne de production, comprenant :
- un poste amont de groupage (5) desdits produits (1) en lots ;
- un poste aval de conditionnement desdits lots par fardelage ou par encaissage ; **caractérisée en ce qu'**elle comprend :
- au moins un dispositif de convoyage (2) desdits produits (1) selon l'une quelconque des revendications précédentes.

8. Installation de traitement selon la revendication précédente, **caractérisée en ce que** :
- ledit poste amont de groupage (5) comprend des moyens de préhension (50) desdits produits (1) selon ledit premier référencement (3) vertical.

9. Installation selon la revendication précédente, **caractérisée par le fait que** lesdits moyens de préhension (50) sont montés mobiles sur des navettes, ledit poste de groupage (5) comprenant des guides (51) de déplacement desdites navette sous forme de moteur linéaire.

## Patentansprüche

1. Vorrichtung (2) zum Fördern von Produkten (1) innerhalb einer Produktionslinie zwischen einer stromaufwärtigen Station, die gemäß einer ersten Referenzierung (3) Produkte (1) liefert, und einer stromabwärtigen Station, die gemäß einer weiteren Referenzierung (4) mit den Produkten (1) versorgt wird; wobei die Vorrichtung Folgendes umfasst:
- mindestens einen Förderer (7), der sich zwischen der stromaufwärtigen Station und der stromabwärtigen Station erstreckt und dazu konfiguriert ist, die Produkte (1) gemäß der weiteren Referenzierung (4) in mindestens einer Förderrichtung zu transportieren;
- wobei der Förderer (7) einen Aufnahmebereich (70) an der stromaufwärtigen Station und einen Zuführbereich (71) der stromabwärtigen Station umfasst;
- Mittel (9) zum Begleiten der Produkte (1) durch Schub, wobei die Begleitmittel (9) eine Sektion umfassen, die sich parallel zu mindestens einem Abschnitt des mindestens einen Förderers (7) erstreckt, der zwischen der stromaufwärtigen Station und der stromabwärtigen Station liegt;
**dadurch gekennzeichnet, dass**:
- der Abschnitt ein feststehendes stromabwärtiges Ende (72) umfasst;
- der Abschnitt und der Aufnahmebereich (70) in fest verbundener Weise zwischen einer oberen Position und einer unteren Position beweglich sind, wobei der Abschnitt um sein feststehendes stromabwärtiges Ende (72) herum beweglich ist; und
- die Sektion gemeinsam mit dem Abschnitt beweglich ist.

2. Fördervorrichtung (2) nach Anspruch 1, **dadurch gekennzeichnet, dass** der Aufnahmebereich (70) vertikal translatorisch beweglich ist.

3. Fördervorrichtung (2) nach einem der vorangehenden Ansprüche, **dadurch gekennzeichnet, dass** in der oberen Position ein Teil des Abschnitts eine Neigung in Bezug auf die Horizontale in einem Winkel von maximal 20°, vorzugsweise 2° oder 3°, umfasst.

4. Fördervorrichtung (2) nach einem der vorangehenden Ansprüche, **dadurch gekennzeichnet, dass** das feste Ende (72) des Abschnitts eine stromabwärtige Umlenkrolle umfasst, die in einer horizontalen Ebene fest ist, und dass der Abschnitt mindestens eine stromaufwärtige Umlenkrolle (73) umfasst, die in Bezug auf die horizontale Ebene vertikal beweglich ist.

5. Fördervorrichtung (2) nach einem der vorangehenden Ansprüche, **dadurch gekennzeichnet, dass** die Begleitmittel (9) einen Cycler mit Stangen (90) umfassen, wobei die Stangen (90) mit mindestens einer Antriebskette (91) fest verbunden montiert sind.

6. Fördervorrichtung (2) nach einem der vorangehenden Ansprüche, **dadurch gekennzeichnet, dass** sie Mittel (10) zum seitlichen Führen der Produkte (1) umfasst, wobei sich die Führungsmittel (10) zumindest entlang eines Teils des Abschnitts erstrecken und ein entsprechender Teil der Führungsmittel (10) gemeinsam mit dem Teil des Abschnitts beweglich ist.

7. Anlage zur Behandlung von Produkten (1) innerhalb einer Produktionslinie, umfassend:
- eine stromaufwärtige Station (5) zum Gruppieren der Produkte (1) zu Chargen;
- eine stromabwärtige Station zum Verpacken der Chargen durch Bündeln oder Einpacken; **dadurch gekennzeichnet, dass** sie Folgendes umfasst:
- mindestens eine Vorrichtung (2) zum Fördern der Produkte (1) nach einem der vorangehenden Ansprüche.

8. Behandlungsanlage nach dem vorangehenden Anspruch, **dadurch gekennzeichnet, dass**:
- die stromaufwärtige Gruppierungsstation (5) Mittel (50) zum Greifen der Produkte (1) gemäß der ersten vertikalen Referenzierung (3) umfasst.

9. Anlage nach dem vorangehenden Anspruch, **dadurch gekennzeichnet, dass** die Greifmittel (50) beweglich an Schiffchen montiert sind, wobei die Gruppierungsstation (5) Führungen (51) zur Bewegung der Schiffchen in Form eines Linearmotors umfasst.

## Claims

1. Device (2) for conveying products (1) within a production line, between an upstream station dispensing in accordance with a first referencing (3) of products (1), and a downstream station supplied with said products (1) in accordance with another referencing (4); said device comprising:
- at least one conveyor (7) extending between said upstream station and said downstream station, which conveyor is configured to transport said products (1) in accordance with said other referencing (4) in at least one conveying direction;
- said conveyor (7) comprising a receiving zone (70) at said upstream station and a zone (71) for supplying said downstream station;
- means (9) for accompanying the products (1) by pushing, said accompanying means (9) comprising a section extending parallel with respect to at least a portion of said at least one conveyor (7), located between said upstream station and said downstream station;
**characterized in that**:
- said portion comprises a fixed downstream end (72);
- said portion and said receiving zone (70) are integrally movable between a top position and a bottom position, said portion being movable around its fixed downstream end (72); and
- said section is jointly movable with said portion.

2. Conveying device (2) according to Claim 1, **characterized by** the fact that said receiving zone (70) is movable in vertical translation.

3. Conveying device (2) according to either one of the preceding claims, **characterized by** the fact that, in the top position, a part of said portion comprises a slope with respect to the horizontal at an angle of at most 20°, preferentially of 2° or 3°.

4. Conveying device (2) according to any one of the preceding claims, **characterized by** the fact that the fixed end (72) of said portion comprises a downstream return roller, which is fixed in a horizontal plane, and said portion comprises at least one upstream return roller (73), which is movable vertically with respect to said horizontal plane.

5. Conveying device (2) according to any one of the preceding claims, **characterized by** the fact that said accompanying means (9) comprise a cycler with bars (90), said bars (90) being mounted integral with at least one drive chain (91).

6. Conveying device (2) according to any one of the preceding claims, **characterized by** the fact that it comprises means (10) for laterally guiding said products (1), said guide means (10) extending at least along a part of said portion, and a corresponding part of said guide means (10) is jointly movable with said part of said portion.

7. Facility for processing products (1) within a production line, comprising:
- an upstream station (5) for grouping said products (1) in batches;
- a downstream station for packaging said batches by bundling or by boxing;
**characterized in that** it comprises:
- at least one device (2) for conveying said products (1) according to any one of the preceding claims.

8. Processing facility according to the preceding claim, **characterized in that**:
- said upstream grouping station (5) comprises means (50) for gripping said products (1) in accordance with said first vertical referencing (3).

9. Facility according to the preceding claim, **characterized by** the fact that said gripping means (50) are mounted so as to be able to move on shuttles, said grouping station (5) comprising guides (51) for moving said shuttles in the form of a linear motor.
